# EUROPÄISCHE PATENTANMELDUNG

(11) **EP 4 786 378 A1**
(43) Veröffentlichungstag der Anmeldung: **05.08.2026**
(21) Anmeldenummer: 26154868.9
(22) Anmeldetag: 29.01.2026
(51) Int. Cl.: B65G 1/137

(54) **VERFAHREN ZUM AUTOMATISCHEN KOMMISSIONIEREN VON WARENTRÄGERSTAPEL, ZUGEHÖRIGES FÖRDERMITTEL UND KOMMISSIONIERSYSTEM**

(30) Priorität: 04.02.2025 DE 102025104099
(71) Anmelder: Swisslog AG, 5033 Buchs/Aarau (CH)
(72) Erfinder: KOHL, Martin, 69469 Buchs (DE); HULTSCH, Stefan, 5036 Oberentfelden (CH)
(74) Vertreter: Dorow, Florian

(57) **Zusammenfassung**

Die Erfindung betrifft ein Verfahren zum automatischen Kommissionieren von Warenträgerstapeln (1), unter anderem aufweisend die Schritte des automatisches Aufnehmens wenigstens eines Warenträgerstapels (1) aus einem ersten Lagerplatz (3.1) gemäß eines Kommissionierauftrags mittels der Umsetzeinrichtung (16.2) des Fördermittels auf den ersten Abstellspaltenbereich (11.1) des Fördermittels und automatisches Aufnehmen wenigstens eines Warenträgerstapels (1) aus einem zweiten Lagerplatz (3.2) gemäß dem Kommissionierauftrag mittels der Umsetzeinrichtung (16.2) des Fördermittels auf den ersten Abstellspaltenbereich (11.1) des Fördermittels oder auf den wenigstens einen zweiten Abstellspaltenbereich (11.2) des Fördermittels, und des automatischen Transportierens der in Reihen auf den Abstellspaltenbereichen (11.1, 11.2) gemäß dem Kommissionierauftrag aufgenommenen Warenträgerstapel (1) durch das Fördermittel entlang einer Förderbahn an den Versand-Palettierungsbereich. Die Erfindung betrifft außerdem ein zugehöriges Fördermittel und ein zugehöriges Kommissioniersystem.

## Beschreibung

Die Erfindung betrifft ein Verfahren zum automatischen Kommissionieren von Warenträgerstapel, ein zugehöriges Fördermittel und ein Kommissioniersystem mit mehreren solchen Fördermitteln.

Die DE 10 2014 104 470 A1 beschreibt ein Verfahren zur Kommissionierung von Behältern mit Ware, die in einem Lager in einer Vielzahl von Stapeln mit mehreren Behältern übereinander in einer Vielzahl von Lagerplätzen gelagert sind, wobei in dem Lager mindestens ein Lagerbediengerät vorgesehen ist, welches im Lager so bewegbar ist, dass es die Vielzahl von Lagerplätzen erreichen kann, wobei das Lagerbediengerät so ausgebildet ist, dass es ein oder mehrere Behälter aus einem Stapel in einem Lagerplatz entnehmen und auf einem Stapelbereich des Lagerbediengeräts zu mindestens einem Stapel stapeln kann, um entsprechend einem Kommissionierauftrag mindestens einen kommissionierten Stapel auf dem Stapelbereich des Lagerbediengeräts zu bilden. Nachteilig ist hierbei jedoch beispielsweise, dass das Lager als ein Hochregallager ausgebildet ist und die Lagerbediengeräte bauartbedingt das Hochregallager nicht verlassen können. Demgemäß ist dort deshalb beispielsweise ein vom Lagerbediengerät separates Nachschubfahrzeug erforderlich, um die zu kommissionierenden Artikel auf die Lagerbereiche der mehreren Lagerbediengeräte verteilen zu können. Darüber hinaus ist eine weitere, von den Lagerbediengeräten und dem Nachschubfahrzeug separate Fördereinrichtung notwendig, um die kommissionierten Stapel aus dem Lager bzw. von den Lagerplätzen zu einer Versand-Palettierstation bringen zu können. Vom Lagerbediengerät, welches sich entlang einer Fahrschiene bewegt und sich dann in einer Abgabeposition befindet, können lediglich zwei kommissionierte Stapel von dem Stapelbereich des Lagerbediengeräts auf eine vom Lagerbediengerät separate Fördereinrichtung abgegeben werden, wobei der Stapelbereich zusätzlich Transportmittel in Form eines Rollenförderers aufweisen muss, damit es möglich ist, die beiden kommissionierten Stapel auf die Fördereinrichtung zu transportieren. Von der Fördereinrichtung gelangen die kommissionierten Stapel immer nur paarweise zu einer Palettierstation, wobei zunächst zwei Paare von kommissionierten Stapeln erst in der Palettiereinrichtung der Palettierstation zu einer Palettenladung zusammengestellt werden, so dass wiederum vier Stapel auf einer Palette vorhanden sind. Eine derartige Warenausgangseinheit wird in einer Wickelstation abschließend mit einer Folie umwickelt und über die Fördereinrichtung zum Warenausgang abtransportiert. Das eigentliche Kommissionieren in Abhängigkeit eines jeweiligen Kommissionierauftrags erfolgt demgemäß dort an der stationären Palettierstation und nicht auf dem Lagerbediengerät.

Aufgabe der Erfindung ist es, ein Verfahren zum automatischen Kommissionieren von Warenträgerstapeln, ein zugehöriges Fördermittel und ein Kommissioniersystem mit mehreren solchen Fördermitteln zu schaffen, wodurch Warenträgerstapel mit einfachen Mitteln, auf besonders flexible Weise und in kurzer Zeit auf einen Transportladungsträger aufkommissioniert werden können.

Die Aufgabe wird gelöst durch ein Verfahren zum automatischen Kommissionieren von Warenträgerstapeln, aufweisend die Schritte:
- Bereitstellen sortenreiner oder vorkommissionierter Warenträgerstapel in wenigstens einer ersten Lagergasse mit mehreren ersten Lagerplätzen eines Lagers zum Lagern sortenreiner oder vorkommissionierter Warenträgerstapel einer ersten Warenstapelart und in wenigstens einer von der ersten Lagergasse verschiedenen zweiten Lagergasse mit mehreren zweiten Lagerplätzen des Lagers zum Lagern sortenreiner oder vorkommissionierter Warenträgerstapel einer von der ersten Warenstapelart verschiedener zweiten Warenstapelart,
- Bereitstellen eines Transportladungsträgers an einem Versand-Palettierungsbereich,
- Bereitstellen wenigstens eines automatisch angetriebenen Fördermittels, das ein Fahrwerk zum Bewegen einer Plattform des Fördermittels auf einer entlang der wenigstens einen ersten Lagergasse und wenigstens einen zweiten Lagergasse des Lagers und über den Versand-Palettierungsbereich laufenden Fahrbahn aufweist, wobei die Plattform einen ersten Abstellspaltenbereich aufweist, der ausgebildet ist zum Abstellen mehrerer Warenträgerstapel nebeneinander in einer ersten Reihe, und die Plattform wenigstens einen parallel zum ersten Abstellspaltenbereich verlaufenden zweiten Abstellspaltenbereich aufweist, der ausgebildet ist zum Abstellen mehrerer weiterer Warenträgerstapel nebeneinander in einer zweiten Reihe parallel zur ersten Reihe an Warenträgerstapel, und wobei das automatisch angetriebene Fördermittel wenigstens eine Umsetzeinrichtung aufweist, die ausgebildet ist zum automatischen Umsetzen eines Warenträgerstapels aus einem der ersten Lagerplätze und/oder aus einem der zweiten Lagerplätze des Lagers auf den ersten Abstellspaltenbereich und/oder auf den zweiten Abstellspaltenbereich,
- automatisches Aufnehmen wenigstens eines Warenträgerstapels aus einem der ersten Lagerplätze gemäß eines Kommissionierauftrags mittels der Umsetzeinrichtung des Fördermittels auf den ersten Abstellspaltenbereich des Fördermittels und automatisches Aufnehmen wenigstens eines Warenträgerstapels aus einem der zweiten Lagerplätze gemäß dem Kommissionierauftrag mittels der Umsetzeinrichtung des Fördermittels auf den ersten Abstellspaltenbereich des Fördermittels oder auf den wenigstens einen zweiten Abstellspaltenbereich des Fördermittels, und
- automatisches Transportieren der in Reihen auf den Abstellspaltenbereichen gemäß dem Kommissionierauftrag aufgenommenen Warenträgerstapel durch das Fördermittel entlang der Fahrbahn an den Versand-Palettierungsbereich und automatisches Umsetzen aller Warenträgerstapel von dem Fördermittel auf eine an den Transportladungsträger führende Fördereinrichtung oder direkt auf den Transportladungsträger an dem Versand-Palettierungsbereich.

Die Warenträgerstapel können insbesondere Stapel von mehreren übereinander abgestellten Warenträgern, wie beispielsweise Getränkekisten sein. Die Warenträgerstapel können aber auch Stapel von mehreren übereinander abgestellten andersartigen Verpackungseinheiten sein, wie beispielsweise Kisten, Regalverpackungen, Trays, Schrumpffoliengebinde, Tonnen oder Eimer sein. Auch wenn in einer vereinfachten Ausführung gegebenenfalls lediglich ein einzelner Warenträger umgesetzt werden kann, besteht ein Warenträgerstapel im Allgemeinen aus mindestens zwei Warenträgern.

Die Warenstapelart kann sich somit durch die Art der Verpackungseinheit kennzeichnen. Die Warenstapelart kann sich vor allem aber durch die Art der Waren an sich kennzeichnen. So kann beispielsweise im Falle von Flaschenkästen bzw. Getränkekisten ein erster Warenträgerstapel ein Stapel von mehreren Mineralwasserkästen einer bestimmten Marke sein und ein zweiter Warenträgerstapel kann ein Stapel von mehreren Bierkästen oder mehreren Limonadenkästen einer bestimmten Marke sein. Sind alle Verpackungseinheiten eines Warenträgerstapels identisch, so handelt es sich um einen sortenreinen Warenträgerstapel. Wird ein Warenträgerstapel aus mehreren Warenträgern unterschiedlicher Warenträgerarten oder unterschiedlicher Warenarten gebildet, so handelt es sich um einen gemischten Warenträgerstapel. Wird der gemischte Warenträgerstapel aus mehreren sortenreinen Warenträgerstapeln zusammengestellt, so kann dieser als ein vorkommissionierter Warenträgerstapel bezeichnet werden.

Das Lager kann vorzugsweise ein auf Ebenen gebundenes Lager sein, das wenigstens eine horizontale Ebene umfasst, welche mehrerer Reihen von mehreren Lagerplätzen aufweist, wobei wenigstens eine erste Reihe von Lagerplätzen und wenigstens eine zweite Reihe von Lagerplätzen eine erste Lagergasse begrenzen über die sowohl die ersten Lagerplätze als auch die zweiten Lagerplätze durch das Fördermittel erreichbar sind, und wenigstens eine an die erste Reihe von Lagerplätzen oder die wenigstens eine zweite Reihe von Lagerplätzen anschließende dritte Reihe von Lagerplätzen eine zweite Lagergasse begrenzen über die sowohl die ersten oder zweiten Lagerplätze als auch die dritten Lagerplätze durch dasselbe Fördermittel erreichbar sind. Das Fördermittel ist insoweit ausgebildet sowohl die erste Lagergasse als auch die zweite Lagergasse befahren zu können.

Das Fördermittel kann ein schienengebundenes Fahrzeug, wie beispielsweise eine Elektrobodenbahn oder eine Elektrohängebahn sein, das einsprechend durch die erste Lagergasse und die zweite Lagergasse sowie an den Versand-Palettierungsbereich laufenden Schienen entlang einer festen Fahrbahn automatisch fahrbar ist. Alternativ kann das Fördermittel ein schienenloses Fahrzeug, wie beispielsweise ein Flurförderfahrzeug sein, das auch als AGV bezeichnet werden kann, welches auf fest vorgegebenen Fahrbahnen fährt, oder ein autonomer mobiler Roboter sein, der auch als AMR bezeichnet werden kann, welcher auf dynamischen Routen in flexiblen Fahrbahnen fahren kann, die einsprechend durch die erste Lagergasse und die zweite Lagergasse sowie an den Versand-Palettierungsbereich führen.

Der Transportladungsträger kann beispielsweise eine Transportpalette nach der Norm EN 13698-1 sein. Diese kann auch als Europalette (EPAL) bezeichnet werden. Es kann sich insbesondere um eine Mehrweg-Transportpalette handeln. Die Transportpalette kann wahlweise aus Holz, Metall oder Kunststoff hergestellt sein. Der Transportladungsträger ist insbesondere dazu bestimmt, das Lager bzw. das Kommissioniersystem zu verlassen, um die auf den Transportladungsträger kommissionierten Waren aus dem Lager des Kommissioniersystems auftragsbezogen an einen räumlich entfernten Abnehmer per Luft, Straße und/oder Schiene auszuliefern. Der Versand-Palettierungsbereich bildet insoweit den Warenausgang des Kommissioniersystems.

Alternativ kann der Transportladungsträger auch ein Rollbehälter, d.h. ein Rollcontainer sein. Derartige Rollbehälter können beispielsweise nach der Norm EN 12674-2 ausgebildet sein. Solche Rollbehälter können eine auf Rollen, insbesondere auch auf Lenkrollen fahrbare Basis aufweisen, welche eine Ablagefläche für Warenträger bildet und die beispielsweise durch zwei gegenüberliegend angeordnete Gitterwände seitliche begrenzt ist.

Die Plattform des Fördermittels dient der vorübergehenden Aufnahme von auftragsbezogenen Warenträgerstapeln auf dem Fördermittel während dem Transport durch die wenigstens eine erste Lagergasse, die wenigstens eine zweite Lagergasse und zwischen dem Lager und dem Versand-Palettierungsbereich. Die Plattform wird entlang der Fahrbahn mittels des Fahrwerks des Fördermittels automatisch innerhalb dem Kommissioniersystem transportiert. Je nachdem ob das Fördermittel schienengebunden oder nicht schienengebunden ausgebildet ist, kann das Fahrwerk entsprechende Räder aufweisen, mit denen die Plattform gefahren werden kann. Als Fahrbahn wird insoweit nicht nur eine Fahrstraße oder Fahrgasse bezeichnet auf dem ein als Fahrzeug ausgebildetes Fördermittel mit seinen Rädern fährt, sondern beispielsweise auch eine Hängebahn, bei der die Räder der Hängebahn auf einer Schiene laufen, die in einem Abstand vom Boden bzw. in einem Abstand von der Fahrbahn über dieser angeordnet ist, wobei die Plattform an den Schiene hängt und über der Fahrbahn schwebend sich entlang dieser automatisch bewegt.

Auf der Plattform des Fördermittels kann insoweit ein Abstellbereich gebildet werden, welche matrixartig in Reihen und Spalten aufgeteilt sein kann, in einer Art, wie die transportierten Warenträgerstapel dann auch auf dem Transportladungsträger abgestellt werden. Die Plattform kann hinsichtlich ihrer Gestalt und Größe somit der Gestalt und Größe eines Transportladungsträgers entsprechen.

Das Fördermittel umfasst wenigstens eine Umsetzeinrichtung, die ausgebildet ist zum automatischen Umsetzen eines Warenträgerstapels aus einem der ersten Lagerplätze und/oder aus einem der zweiten Lagerplätze des Lagers auf den ersten Abstellspaltenbereich und/oder auf den zweiten Abstellspaltenbereich der Plattform. Die Umsetzeinrichtung kann beispielsweise wenigstens eine Hubgabel aufweisen und/oder eine Greifeinrichtung aufweisen, die beispielsweise einen Klemmgreifer oder einen Sauggreifer umfassen kann.

Die Umsetzeinrichtung kann prinzipiell verschiedene Einrichtungen aufweisen, die ganze Warenträgerstapel oder Warenträgerteilstapel von einem bestimmten Lagerplatz automatisch abnehmen und auf die Plattform abstellen können. Die Umsetzeinrichtung kann außerdem ausgebildet und eingerichtet sein, die auf der Plattform vorhandenen Warenträgerstapel oder Warenträgerteilstapel an dem Versand-Palettierungsbereich automatisch abzusetzen. Die Umsetzeinrichtung kann darüber hinaus ausgebildet und eingerichtet sein, auf der Plattform vorhandene Warenträgerstapel oder Warenträgerteilstapel auf einen anderen Platz auf der Plattform zu versetzen oder zu verschieben.

Die Umsetzeinrichtung kann beispielsweise automatisch antreibbare Kettenförderer, Rollenförderer oder Bandförderer aufweisen. Die Umsetzeinrichtung kann insbesondere wenigstens eine Hubgabel aufweisen, die bezüglich der Plattform einerseits in einer horizontalen Ebene automatisch längsverstellbar an dem Fördermittel gelagert ist und andererseits in einer vertikalen Richtung automatisch höhenverstellbar an dem Fördermittel gelagert ist. In einer ersten Ausführungsvariante kann die Umsetzeinrichtung lediglich eine einzige Hubgabel aufweisen. In einer zweiten Ausführungsvariante kann die Umsetzeinrichtung beispielsweise zwei Hubgabeln oder drei Hubgabeln aufweisen. Die mehreren Hubgabeln können dabei unabhängig voneinander automatisch ansteuerbar sein. Derartige Umsetzeinrichtungen mit Hubgabeln sind im Folgenden im Rahmen des erfindungsgemäßen Fördermittels noch detaillierter beschrieben.

Das Fördermittel fährt erfindungsgemäß automatisch von einem Lagerplatz zum nächsten Lagerplatz, und zwar in Abhängigkeit eines bestimmten Kommissionierauftrags. Je nachdem welche Waren der Kommissionierauftrag umfasst, fährt das Fördermittel genau an diejenigen Lagerplätze, an denen die gemäß dem Kommissionierauftrag zu kommissionierenden Waren gelagert sind. Dabei kann einem jeweiligen bestimmten Lagerplatz genau eine bestimmte Ware zugeordnet sein, die an genau diesem Lagerplatz vorgehalten sind. Ein bestimmter Lagerplatz kann auch dazu bestimmt sein, nicht sortenrein, d.h. gemischt gestapelte Warenträgerstapel vorzuhalten. Die Bestimmung, an welchem Lagerplatz welche Ware oder Warenart gelagert wird, kann dynamisch erfolgen, d.h. der Lagerplatz für einen bestimmte Ware oder Warenart kann wechseln. Dies kann beispielsweise durch ein elektronisches Lagerverwaltungssystem automatische erfolgen.

Von den Lagerplätzen werden vorzugsweise vollständige Warenträgerstapel oder zumindest Warenträgerteilstapel, bestehend aus wenigstens zwei Warenträgern, durch die Umsetzeinrichtung in einem Griff von dem Lagerplatz auf die Plattform des Fördermittels umgesetzt. Mittels der Umsetzeinrichtung können gegebenenfalls auch mehrere Warenträgerstapel gleichzeitig umgesetzt werden.

Dasselbe Fördermittel, welches automatisch von einem Lagerplatz zum nächsten Lagerplatz fährt, ist außerdem erfindungsgemäß ausgebildet und eingerichtet, die gemäß des Kommissionierauftrags von den Lagerplätzen auf die Plattform aufgenommenen Warenträgerstapel entlang der Fahrbahn automatisch zu dem Versand-Palettierungsbereich zu fahren und dort abzugeben.

Ist das Fördermittel an dem Versand-Palettierungsbereich angekommen, können je nach Ausführungsvariante des Verfahrens die Warenträgerstapel als eine vollständige Kommissionseinheit alle gemeinsam gleichzeitig auf den Transportladungsträger umgesetzt werden. Alternativ können die Warenträgerstapel in einzelne Warenträgerstapel aufgelöst und als Einzel-Warenträgerstapel, beispielsweise über eine separate Rollenbahn am Versand-Palettierungsbereich seriell von der Plattform des Fördermittels entgegengenommen und an den Transportladungsträger umgesetzt werden. Des Weiteren alternativ können die Warenträgerstapel entstapelt werden und in einzelne Warenträger aufgelöst und als Einzel-Warenträger, beispielsweise über eine separate Rollenbahn am Versand-Palettierungsbereich seriell von der Plattform des Fördermittels entgegengenommen und an den Transportladungsträger umgesetzt werden.

Dasselbe Fördermittel, welches automatisch von einem Lagerplatz zum nächsten Lagerplatz fährt und auch entlang der Fahrbahn an den Versand-Palettierungsbereich fährt, kann in einer Weiterentwicklung außerdem ausgebildet und eingerichtet sein, das Lager, insbesondere die ersten Lagerplätze und die zweiten Lagerplätze, mit vollständigen Warenträgerstapeln oder zumindest Warenträgerteilstapeln aus einem Wareneingangsbereichs des Kommissioniersystems zu befüllen. Dazu kann das Fördermittel entlang der Fahrbahn automatisch an einen Wareneingangsbereich gefahren werden, wo es vollständige Warenträgerstapel, Warenträgerteilstapel oder auch einzelne Warenträger von einem Quellladungsträger aufnimmt, um diese automatisch auf die Lagerplätze des Lagers zu verteilen.

Das automatische Umsetzen aller Warenträgerstapel von dem Fördermittel auf den Transportladungsträger kann an dem Versand-Palettierungsbereich mittels der Umsetzeinrichtung des Fördermittels durchgeführt werden. Die Umsetzeinrichtung kann dabei die Warenträgerstapel entweder direkt von der Plattform des Fördermittels auf den Transportladungsträger umsetzen, oder die Umsetzeinrichtung kann mit einer zusätzlichen Fördereinrichtung, wie beispielsweise einer Förderbahn kombiniert sein, wobei die Umsetzeinrichtung die Warenträgerstapel oder die in einzelne Warenträger aufgelösten Warenträgerstapel von der Plattform des Fördermittels auf die zusätzliche Fördereinrichtung oder die Förderbahn umsetzt, das zusätzliche Fördermittel oder die zusätzliche Förderbahn die Warenträgerstapel oder die in einzelne Warenträger aufgelösten Warenträgerstapel einzeln von dem Ort der Plattform des Fördermittels an den Transportladungsträger fördert, die dann an dieser Stelle auf dem Transportladungsträger aufgebaut werden.

Die Warenträgerstapel können durch die Umsetzeinrichtung des Fördermittels auf einen bestimmten Abstellplatz von mehreren verschiedenen Abstellplätzen des ersten Abstellspaltenbereichs und des wenigstens einen zweiten Abstellspaltenbereichs gemäß des Kommissionierauftrags und in Abhängigkeit einer Palettenbildungsvorschrift auftragsbezogen auf die Plattform des Fördermittels automatisch verteilt werden.

Demgemäß kann der erste Abstellspaltenbereich der Plattform des Fördermittels mehrere erste Abstellplätze für Warenträgerstapel aufweisen. Beispielsweise kann der erste Abstellspaltenbereich der Plattform zwei, drei oder vier nebeneinanderliegende erste Abstellplätze aufweisen. In gleicher Weise kann der zweite Abstellspaltenbereich der Plattform zwei, drei oder vier nebeneinanderliegende zweite Abstellplätze aufweisen.

Das Lagenbild der ersten und zweiten Abstellplätze kann dem Lagerbild der Warenträgerstapel auf einer sortenreinen Quell-Ladungsträgers entsprechen. Die Grundfläche der Plattform kann jedoch um ein gewisses Maß größer ausgebildet sein als die Grundfläche eines genormten Transportladungsträgers, wie beispielsweise einer Transportpalette nach der Norm EN 13698-1. Demgemäß können die ersten und zweiten Abstellplätze auf der Plattform des Fördermittels derart gestaltet sein, dass die auf den Abstellplätzen abgestellten Warenträgerstapel nicht seitlich unmittelbar aneinander anstehend auf der Plattform positioniert sind, sondern in Abständen der Warenträgerstapel voneinander, so dass jeweils ein Spaltbereich zwischen zwei unmittelbar benachbarten Warenträgerstapel gebildet werden. Dies kann das vereinzelte Umsetzen einzelner Warenträgerstapel durch die Umsetzeinrichtung vereinfachen. Die Warenträgerstapel können auf der Plattform auch im Vergleich zu ihren Orientierungen auf dem Quell-Ladungsträger um 90 Grad gedreht abgestellt werden. So können Warenträgerstapel beispielsweise aus einer Orientierung, die einen Längslauf der Warenträgerstapel bestimmt, in eine um 90 Grad gedrehte Orientierung, die einen Querlauf der Warenträgerstapel bestimmt, geändert werden. In analoger Weise können Warenträgerstapel beispielsweise aus einer Orientierung, die einen Querlauf der Warenträgerstapel bestimmt, in eine um 90 Grad gedrehte Orientierung, die einen Längslauf der Warenträgerstapel bestimmt, geändert werden.

Die palettierten Quell-Ladungsträger, die insbesondere sortenrein palettierte Quell-Ladungsträger sein können, bestehend aus mehreren in Reihen und Spalten angeordneten Warenträgerstapeln können an einer Depalettierstation automatisch in einzelne Warenträgerstapel aufgelöst werden, und die vereinzelten Warenträgerstapel können dabei durch das Fördermittel an den wenigstens einen ersten Lagerplatz und/oder den wenigstens einen zweiten Lagerplatz sortiert nach Warenstapelart automatisch verteilt werden. In einer abgewandelten Ausführung können die Warenträger gegebenenfalls auch einzeln oder in Stapeln direkt bereitgestellt werden, statt auf Quell-Ladungsträgern, beispielsweise über eine Förderbahn.

Dazu kann das Fördermittel ein oder mehrere Warenträgerstapel mittels der Umsetzeinrichtung automatisch aufnehmen und automatisch an einen zugeordneten Lagerplatz fahren, und zwar entlang der dazu vorgesehenen Fahrbahn.

Die Umsetzeinrichtung kann dabei die Warenträgerstapel entweder direkt von dem Quell-Ladungsträger auf die Plattform des Fördermittels umsetzen, oder die Umsetzeinrichtung kann mit einer zusätzlichen Förderbahn kombiniert sein, wobei die Umsetzeinrichtung die Warenträgerstapel oder die in einzelne Warenträger aufgelösten Warenträgerstapel von dem Quell-Ladungsträger auf die zusätzliche Förderbahn umsetzt, die zusätzliche Förderbahn die Warenträgerstapel oder die in einzelne Warenträger aufgelösten Warenträgerstapel einzeln von dem Ort des Quell-Ladungsträgers an die Plattform des Fördermittels bzw. an die Umsetzeinrichtung des Fördermittels fördert, die dann an dieser Stelle die Warenträgerstapel auf der Plattform aufbaut.

Nach dem Auflösen der Warenträgerstapel des Quell-Ladungsträgers in vereinzelte Warenträgerstapel, kann ein jeweiliger Warenträgerstapel gegebenenfalls umorientiert werden. Ein solches Umorientieren kann entweder derart erfolgen, dass ein Warenträgerstapel, der bezüglich der folgenden Transportrichtung in Längslauf orientiert ist, in Querlauf umorientiert wird, bevor der Warenträgerstapel in Querlauf in Transportrichtung automatisch auf das Fördermittel transportiert wird, oder das Umorientieren kann derart erfolgen, dass ein Warenträgerstapel, der bezüglich der folgenden Transportrichtung in Querlauf orientiert ist, in Längslauf umorientiert wird, bevor der Warenträgerstapel in Längslauf in Transportrichtung automatisch auf das Fördermittel transportiert wird.

Dies hat den Vorteil, dass die Warenträgerstapel oder Warenträgerteilstapel von der Umsetzeinrichtung des Fördermittels stets in derselben Querlauf-Orientierung aller Warenträger aufgenommen und auch in derselben Querlauf-Orientierung wieder abgesetzt werden können.

Als Warenträgerstapel können insbesondere Stapel von Getränkekisten automatisch kommissioniert werden.

So kann beispielsweise im Falle von Flaschenkästen bzw. Getränkekisten ein erster Warenträgerstapel ein Stapel von mehreren Mineralwasserkästen einer bestimmten Marke sein und ein zweiter Warenträgerstapel kann ein Stapel von mehreren Bierkästen oder mehreren Limonadenkästen einer bestimmten Marke sein. Sind alle Verpackungseinheiten eines Warenträgerstapels identisch, so handelt es sich um einen sortenreinen Warenträgerstapel. Wird ein Warenträgerstapel aus mehreren Warenträgern unterschiedlicher Warenträgerarten oder unterschiedlicher Warenarten gebildet, so handelt es sich um einen gemischten Warenträgerstapel. Wird der gemischte Warenträgerstapel aus mehreren sortenreinen Warenträgerstapel zusammengestellt, so kann dieser als ein vorkommissionierter Warenträgerstapel bezeichnet werden.

Das automatische Transportieren der in Reihen auf den Abstellspaltenbereichen gemäß dem Kommissionierauftrag aufgenommenen Warenträgerstapel kann durch das Fördermittel entlang der Fahrbahn an den Versand-Palettierungsbereich erfolgen. Optional kann ein abschließendes gemeinsames automatisches Umsetzen aller Warenträgerstapel von dem Fördermittel auf den Transportladungsträger an dem Versand-Palettierungsbereich erfolgen.

In einer solchen Ausführungsvariante des Verfahrens können die von den Lagerplätzen gemäß des Kommissionierauftrags auf die Plattform des Fördermittels zusammengestellten Warenträgerstapel gemeinsam an den Versand-Palettierungsbereich gefahren werden und dort unmittelbar auf den dortigen Transportladungsträger umgesetzt werden. Das Umsetzen kann durch die Umsetzeinrichtung des Fördermittels automatisch erfolgen. Dabei können die gemäß des Kommissionierauftrags zusammengestellten Warenträgerstapel in einem automatisch vorbestimmten Stapelmuster von den Lagerplätzen auf die Plattform des Fördermittels umgesetzt werden. Dieses Stapelmuster kann dann auch für das Stapeln bzw. das Absetzen der Warenträgerstapel auf dem Transportladungsträger gelten bzw. das für den Transportladungsträger vorgesehene Stapelmuster kann bereits beim Abholen der Warenträgerstapel von den Lagerplätzen für das Aufnehmen auf die Plattform des Fördermittels angewandt werden, so dass beim automatischen Umsetzen der Warenträgerstapel auf den Transportladungsträger nicht mehr umgestapelt werden muss.

Die Aufgabe wird auch gelöst durch ein Fördermittel zum automatischen Transportieren und Kommissionieren von Warenträgerstapel, insbesondere zum automatischen Kommissionieren von Warenträgerstapel gemäß einem Verfahren nach einem der beschriebenen Ausführungsformen, aufweisend:
- ein Fahrwerk mit Antrieben zum automatischen Fahren des Fahrwerks entlang einer Fahrbahn,
- eine am Fahrwerk angeordnete Plattform, die einen ersten Abstellspaltenbereich aufweist, der ausgebildet ist zum Abstellen mehrerer Warenträgerstapel nebeneinander in einer ersten Reihe, und die wenigstens einen parallel zum ersten Abstellspaltenbereich verlaufenden zweiten Abstellspaltenbereich aufweist, der ausgebildet ist zum Abstellen mehrerer weiterer Warenträgerstapel nebeneinander in einer zweiten Reihe parallel zur ersten Reihe an Warenträgerstapel, und
- eine Umsetzeinrichtung, die ausgebildet ist zum automatischen Aufnehmen von Warenträgerstapel auf den ersten Abstellspaltenbereich und/oder auf den zweiten Abstellspaltenbereich der Plattform.

Wie bereits erwähnt, kann das Fördermittel ein schienengebundenes Fahrzeug, wie beispielsweise eine Elektrobodenbahn oder eine Elektrohängebahn sein, das einsprechend durch die erste Lagergasse und die zweite Lagergasse sowie an den Versand-Palettierungsbereich laufenden Schienen entlang einer festen Fahrbahn automatisch fahrbar ist. Alternativ kann das Fördermittel ein schienenloses Fahrzeug, wie beispielsweise ein Flurförderfahrzeug sein, das auch als AGV bezeichnet werden kann, welches auf fest vorgegebenen Fahrbahnen fährt, oder ein autonomer mobiler Roboter sein, der auch als AMR bezeichnet werden kann, welcher auf dynamischen Routen in flexiblen Fahrbahnen fahren kann, die einsprechend durch die erste Lagergasse und die zweite Lagergasse sowie an den Versand-Palettierungsbereich führen.

Die Umsetzeinrichtung kann prinzipiell verschiedene Einrichtungen aufweisen, die ganze Warenträgerstapel oder Warenträgerteilstapel von einem bestimmten Lagerplatz automatisch abnehmen und auf die Plattform abstellen können. Die Umsetzeinrichtung kann außerdem ausgebildet und eingerichtet sein, die auf der Plattform vorhandenen Warenträgerstapel oder Warenträgerteilstapel an dem Versand-Palettierungsbereich automatisch abzusetzen. Die Umsetzeinrichtung kann darüber hinaus ausgebildet und eingerichtet sein, auf der Plattform vorhandene Warenträgerstapel oder Warenträgerteilstapel auf einen anderen Platz auf der Plattform zu versetzen oder zu verschieben.

Die Umsetzeinrichtung kann beispielsweise automatisch antreibbare Kettenförderer, Rollenförderer oder Bandförderer aufweisen. Die Umsetzeinrichtung kann insbesondere wenigstens eine Hubgabel aufweisen, die bezüglich der Plattform einerseits in einer horizontalen Ebene automatisch längsverstellbar an dem Fördermittel gelagert ist und andererseits in einer vertikalen Richtung automatisch höhenverstellbar an dem Fördermittel gelagert ist. In einer ersten Ausführungsvariante kann die Umsetzeinrichtung lediglich eine einzige Hubgabel aufweisen. In einer zweiten Ausführungsvariante kann die Umsetzeinrichtung beispielsweise zwei Hubgabeln oder drei Hubgabeln aufweisen. Die mehreren Hubgabeln können dabei unabhängig voneinander automatisch ansteuerbar sein.

Demgemäß kann die Umsetzeinrichtung wenigstens eine Hubgabel aufweisen, die zwischen einer Verwahrungsstellung, in der die Auflagefläche der Hubgabel innerhalb einer Abstellfläche der Plattform positioniert ist und einer Aufnahmestellung, in der die Auflagefläche der Hubgabel aus der Abstellfläche der Plattform herausgefahren ist, längsverstellbar an dem Fahrwerk gelagert sein, wobei die Hubgabel außerdem aus einer Absenkstellung, in der die Auflageflächen der Hubgabel unterhalb der Ebene der Abstellfläche der Plattform positioniert ist und wenigstens einer Anhebestellung, insbesondere einer Anhebestellung in der die Auflageflächen der Hubgabel über der Ebene der Abstellfläche der Plattform positioniert ist, höhenverstellbar an dem Fahrwerk gelagert sein.

In einer Weiterbildung des Fördermittels kann die Umsetzeinrichtung eine erste Hubgabel aufweisen, welche derart an der Plattform gelagert ist, dass sie in der Verwahrungsstellung innerhalb des ersten Abstellspaltenbereiches der Abstellfläche der Plattform positioniert ist und die Umsetzeinrichtung kann eine von der ersten Hubgabel verschiedene zweite Hubgabel aufweisen, die unabhängig von der ersten Hubgabel bewegbar gelagert ist und die derart an der Plattform gelagert ist, dass sie in der Verwahrungsstellung innerhalb des zweiten Abstellspaltenbereiches der Abstellfläche der Plattform positioniert ist.

Das Fördermittel kann als ein schienengebundenes Fahrzeug, insbesondere als eine Elektrobodenbahn oder eine Elektrohängebahn, ausgebildet sein oder als ein schienenloses Fahrzeug, insbesondere als ein auf festen Routen entlang einer Fahrbahn fahrendes fahrerloses Transportfahrzeug oder als ein frei navigierter mobiler Roboter, ausgebildet sein.

Die Aufgabe wird außerdem gelöst durch ein Kommissioniersystem zum automatischen Kommissionieren von Warenträgerstapel, insbesondere zum automatischen Kommissionieren von Warenträgerstapel gemäß einem Verfahren nach einem der beschriebenen Ausführungsformen, aufweisend:
- ein elektronisches Lagerverwaltungssystem, welches ausgebildet und eingerichtet ist, den Transport von vereinzelten Warenträgerstapel aus palettierten Quell-Ladungsträgern auf Transportladungsträger in Abhängigkeit eines Kommissionierauftrags und einer Palettenbildungsvorschrift zu planen,
- eine Depalettierstation, die ausgebildet und eingerichtet ist zum automatischen Auflösen palettierter Quell-Ladungsträger bestehend aus mehreren in Reihen und Spalten angeordneten Warenträgerstapel in einzelne Warenträgerstapel oder Reihen von Warenträgerstapel,
- einen Umsetzer, der ausgebildet und eingerichtet ist zum automatischen Umorientieren jeweiliger Warenträgerstapel,
- ein Lager mit mehreren Lagergassen und Lagerplätzen zum Lagern von sortenreinen und/oder vorkommissionierten Warenträgerstapel,
- eine Versand-Palettierungsstation, die ausgebildet und eingerichtet ist zum Bereitstellen eines leeren Transportladungsträgers und zum Abtransportieren eines mit Warenträgerstapel beladenen Transportladungsträgers aus dem Kommissioniersystem, sowie
- mehrere Fördermittel, insbesondere mehrere Fördermittel nach einem der beschriebenen Ausführungsformen, die ausgebildet und eingerichtet sind, sowohl zum automatischen Transportieren der Warenträgerstapel von der Depalettierstation und/oder vom Umsetzer zu den Lagerplätzen des Lagers als auch zum automatischen Transportieren von Warenträgerstapel, die das Fördermittel automatisch angesteuert durch das elektronische Lagerverwaltungssystem in Abhängigkeit des jeweiligen Kommissionierauftrags und einer jeweiligen Palettenbildungsvorschrift automatisch auf die Plattform aufkommissioniert hat, entlang einer Fahrbahn von den Lagerplätzen zu der Versand-Palettierungsstation, um die kommissionierten Warenträgerstapel an der Versand-Palettierungsstation automatisch an eine an den Transportladungsträger führende Fördereinrichtung der Versand-Palettierungsstation oder direkt an einen an der Versand-Palettierungsstation bereitgestellten Transportladungsträger abzugeben.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, vorteilhafte Merkmale von alternativen Ausführungsvarianten der Erfindung darstellen.

Es zeigen:
- Fig. 1: ein Flussdiagramm der Schritte in dem grundlegenden erfindungsgemäßen Verfahren,
- Fig. 2: eine schematische Darstellung eines beispielhaften, mit einer Plattform und einer Umsetzeinrichtung mit zwei Hubgabeln ausgestatteten Fördermittels, das auf einer Fahrbahn in eine Lagergasse zwischen gegenüberliegenden Lagerplätzen einfährt, in einer Ansicht von oben,
- Fig. 3: eine Seitenansicht des Fördermittels gemäß Fig. 2,
- Fig. 4: eine schematische Darstellung des Fördermittels gemäß Fig. 2 mit den beiden Hubgabeln in einer Verwahrungsstellung,
- Fig. 5: eine Seitenansicht des Fördermittels gemäß Fig. 4 mit den Hubgabeln in der abgesenkten Verwahrungsstellung,
- Fig. 6: eine schematische Darstellung des Fördermittels gemäß Fig. 2 mit einer der beiden Hubgabeln in einer Aufnahmestellung,
- Fig. 7: eine Seitenansicht des Fördermittels gemäß Fig. 6 mit der Hubgabel in der abgesenkten Aufnahmestellung,
- Fig. 8: eine schematische Darstellung des Fördermittels gemäß Fig. 2 mit einer der beiden Hubgabeln in einer angehobenen Aufnahmestellung,
- Fig. 9: eine Seitenansicht des Fördermittels gemäß Fig. 8 mit der Hubgabel in der angehobenen Aufnahmestellung,
- Fig. 10: eine schematische Darstellung des Fördermittels gemäß Fig. 2 mit der Hubgabel in einer Anhebestellung, während ihre Bewegung von der Aufnahmestellung in die Verwahrungsstellung,
- Fig. 11: eine Seitenansicht des Fördermittels gemäß Fig. 10 mit der Hubgabel in der Anhebestellung während ihre Bewegung von der Aufnahmestellung in die Verwahrungsstellung,
- Fig. 12: eine schematische Darstellung des Fördermittels gemäß Fig. 2 mit der Hubgabel in einer Anhebestellung, während ihre Bewegung von der Aufnahmestellung in die Verwahrungsstellung, wobei ein bereits auf der Plattform des Fördermittels vorhandener Warenträgerstapel mit angehoben wird,
- Fig. 13: eine Seitenansicht des Fördermittels gemäß Fig. 12 mit der Hubgabel in der Anhebestellung, während ihre Bewegung von der Aufnahmestellung in die Verwahrungsstellung, wobei der bereits auf der Plattform des Fördermittels vorhandener Warenträgerstapel mit angehoben wird,
- Fig. 14: eine schematische Darstellung des Fördermittels gemäß Fig. 2 mit der Hubgabel in der angehobenen Verwahrungsstellung,
- Fig. 15: eine Seitenansicht des Fördermittels gemäß Fig. 14 mit der Hubgabel in der angehobenen Verwahrungsstellung,
- Fig. 16: eine schematische Darstellung des Fördermittels gemäß Fig. 2 mit der Hubgabel in der abgesenkten Verwahrungsstellung,
- Fig. 17: eine Seitenansicht des Fördermittels gemäß Fig. 14 mit der Hubgabel in der abgesenkten Verwahrungsstellung, und
- Fig. 18: eine schematische Darstellung eines erfindungsgemäßen Kommissioniersystems in einer Ansicht von oben.

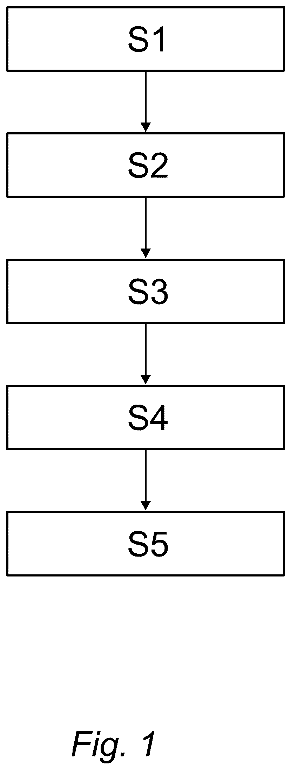

In der Fig. 1 sind die Schritte in dem grundlegenden erfindungsgemäßen Verfahren zum automatischen Kommissionieren von Warenträgerstapel 1 als ein Flussdiagramm dargestellt.

In einem ersten Schritt S1 des Verfahrens erfolgt ein Bereitstellen sortenreiner oder vorkommissionierter Warenträgerstapel 1 in wenigstens einer ersten Lagergasse 2.1 mit mehreren ersten Lagerplätzen 3.1 eines Lagers 4 zum Lagern sortenreiner oder vorkommissionierter Warenträgerstapel 1 einer ersten Warenstapelart und in wenigstens einer von der ersten Lagergasse 2.1 verschiedenen zweiten Lagergasse 2.2 mit mehreren zweiten Lagerplätzen 3.2 des Lagers 4 zum Lagern sortenreiner oder vorkommissionierter Warenträgerstapel 1 einer von der ersten Warenstapelart verschiedener zweiten Warenstapelart.

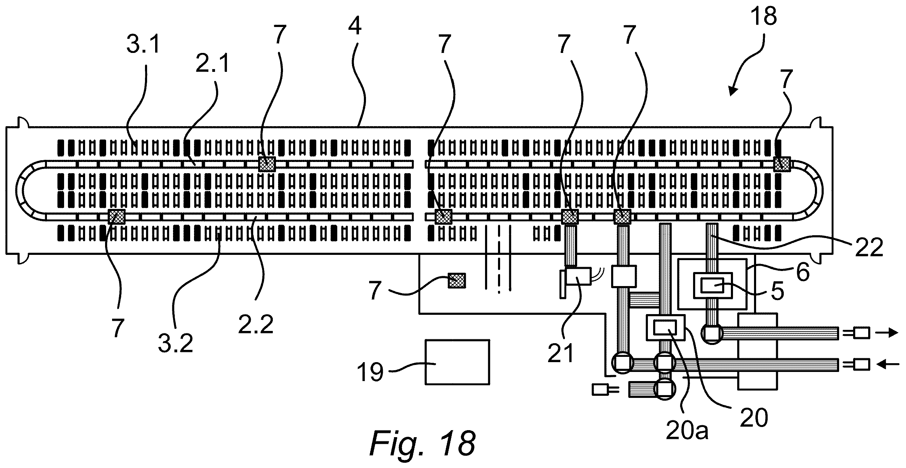

In einem zweiten Schritt S2 des Verfahrens erfolgt ein Bereitstellen eines Transportladungsträgers 5 an einem Versand-Palettierungsbereich 6, wie er insbesondere in Fig. 18 aufgezeigt ist.

In einem dritten Schritt S3 des Verfahrens erfolgt ein Bereitstellen wenigstens eines automatisch angetriebenen Fördermittels 7, das ein Fahrwerk 8 zum Bewegen einer Plattform 9 des Fördermittels 7 auf einer entlang der wenigstens einen ersten Lagergasse 2.1 und wenigstens einen zweiten Lagergasse 2.2 des Lagers 4 und über den Versand-Palettierungsbereich 6 laufenden Fahrbahn 10 aufweist, wobei die Plattform 9 einen ersten Abstellspaltenbereich 11.1 aufweist, der ausgebildet ist zum Abstellen mehrerer Warenträgerstapel 1 nebeneinander in einer ersten Reihe, und die Plattform 9 wenigstens einen parallel zum ersten Abstellspaltenbereich 11.1 verlaufenden zweiten Abstellspaltenbereich 11.2 aufweist, der ausgebildet ist zum Abstellen mehrerer weiterer Warenträgerstapel 1 nebeneinander in einer zweiten Reihe parallel zur ersten Reihe an Warenträgerstapel 1, und wobei das automatisch angetriebene Fördermittel 7 wenigstens eine Umsetzeinrichtung 12 aufweist, die ausgebildet ist zum automatischen Umsetzen eines Warenträgerstapels 1 aus einem der ersten Lagerplätze 3.1 und/oder aus einem der zweiten Lagerplätze 3.2 des Lagers 4 auf den ersten Abstellspaltenbereich 11.1 und/oder auf den zweiten Abstellspaltenbereich 11.2 der Plattform 9.

In einem vierten Schritt S4 des Verfahrens erfolgt ein automatisches Aufnehmen wenigstens eines Warenträgerstapels 1 aus einem der ersten Lagerplätze 3.1 gemäß eines Kommissionierauftrags mittels der Umsetzeinrichtung 12 des Fördermittels 7 auf den ersten Abstellspaltenbereich 11.1 des Fördermittels 7 und automatisches Aufnehmen wenigstens eines Warenträgerstapels 1 aus einem der zweiten Lagerplätze 3.2 gemäß dem Kommissionierauftrag mittels der Umsetzeinrichtung 12 des Fördermittels 7 auf den ersten Abstellspaltenbereich 11.1 des Fördermittels 7 oder auf den wenigstens einen zweiten Abstellspaltenbereich 11.2 des Fördermittels 7.

In einem fünften Schritt S5 des Verfahrens erfolgt ein automatisches Transportieren der in Reihen auf den Abstellspaltenbereichen 11.1, 11.2 gemäß dem Kommissionierauftrag aufgenommenen Warenträgerstapel 1 durch das Fördermittel 7 entlang der Fahrbahn 10 an den Versand-Palettierungsbereich 6 und automatisches Umsetzen aller Warenträgerstapel 1 von dem Fördermittel 7 auf eine an den Transportladungsträger 5 führende Fördereinrichtung 22 oder direkt auf den Transportladungsträger 5 an dem Versand-Palettierungsbereich 6. Die Fördereinrichtung 22 (Fig. 18) ist dem Versand-Palettierungsbereich 6 (VPB) zugehörig und kann daher auch als VPB-Fördereinrichtung 22 bezeichnet werden.

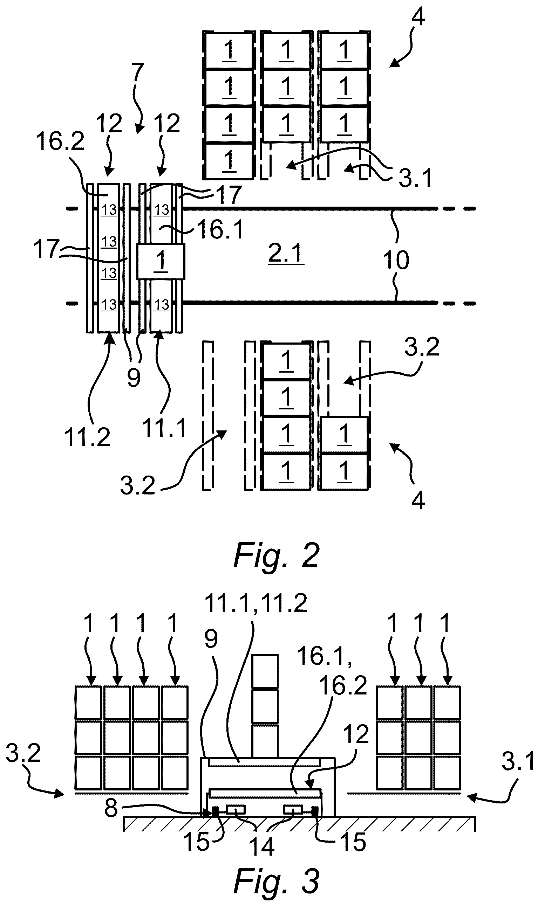

Wie insbesondere in Fig. 2 bis Fig. 18 aufgezeigt ist, wird im Falle des vorliegenden Ausführungsbeispiels das automatische Umsetzen aller Warenträgerstapel 1 von dem Fördermittel 7 auf den Transportladungsträger 5 an dem Versand-Palettierungsbereich 6 mittels der Umsetzeinrichtung 12 des Fördermittels 7 durchgeführt.

Die Warenträgerstapel 1 werden durch die Umsetzeinrichtung 12 des Fördermittels 7 auf einen bestimmten Abstellplatz 13 von mehreren verschiedenen Abstellplätzen 13 des ersten Abstellspaltenbereichs 11.1 und des wenigstens einen zweiten Abstellspaltenbereichs 11.2 gemäß des Kommissionierauftrags und in Abhängigkeit einer Palettenbildungsvorschrift auftragsbezogen auf die Plattform 9 des Fördermittels 7 automatisch verteilt.

Das Fördermittel 7 dient zum automatischen Transportieren und Kommissionieren von Warenträgerstapel 1, insbesondere zum automatischen Kommissionieren von Warenträgerstapel 1 gemäß einem Verfahren nach einem der beschriebenen Ausführungsformen.

Das Fördermittel 7 weist das Fahrwerk 8 mit Antrieben 14 zum automatischen Fahren des Fahrwerks 8 entlang der Fahrbahn 10 auf. Dazu kann das Fahrwerk 8 beispielsweise Räder 15 umfassen, welche von den Antrieben 14 angetrieben werden können.

Das Fördermittel 7 kann, wie in Fig. 2 bis Fig. 18 schematisch dargestellt ist, als ein schienengebundenes Fahrzeug, insbesondere als eine Elektrobodenbahn ausgebildet sein. Alternativ könnte das Fördermittel 7 aber auch als ein schienenloses Fahrzeug, insbesondere als ein auf festen Routen entlang der Fahrbahn 10 fahrendes fahrerloses Transportfahrzeug oder als ein frei navigierter mobiler Roboter ausgebildet sein.

An dem Fahrwerk 8 ist die Plattform 9 angeordnet, die den ersten Abstellspaltenbereich 11.1 aufweist, der ausgebildet ist zum Abstellen mehrerer Warenträgerstapel 1 nebeneinander in einer ersten Reihe, und die einen parallel zum ersten Abstellspaltenbereich 11.1 verlaufenden zweiten Abstellspaltenbereich 11.2 aufweist, der ausgebildet ist zum Abstellen mehrerer weiterer Warenträgerstapel 1 nebeneinander in einer zweiten Reihe parallel zur ersten Reihe an Warenträgerstapel 1.

Die Umsetzeinrichtung 12 ist dabei ausgebildet zum automatischen Aufnehmen von Warenträgerstapeln 1 auf den ersten Abstellspaltenbereich 11.1 und/oder auf den zweiten Abstellspaltenbereich 11.2 der Plattform 9.

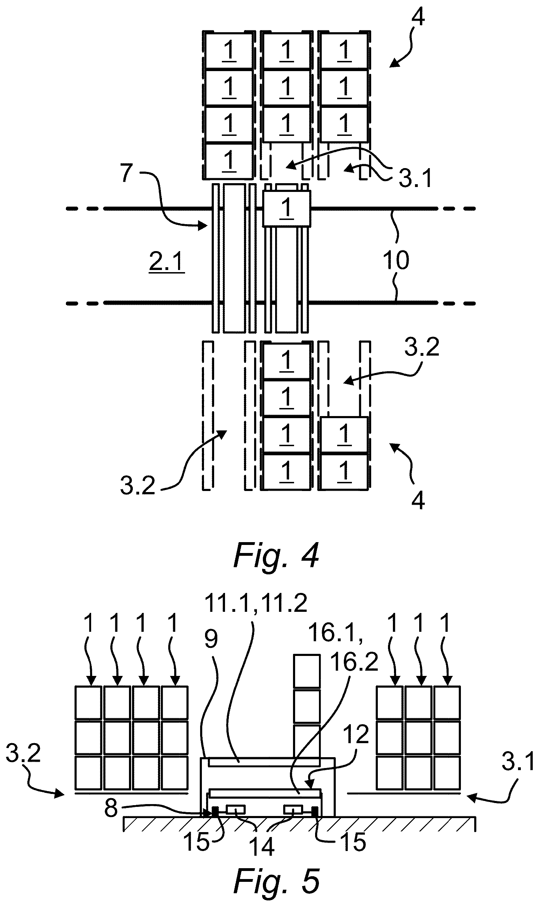

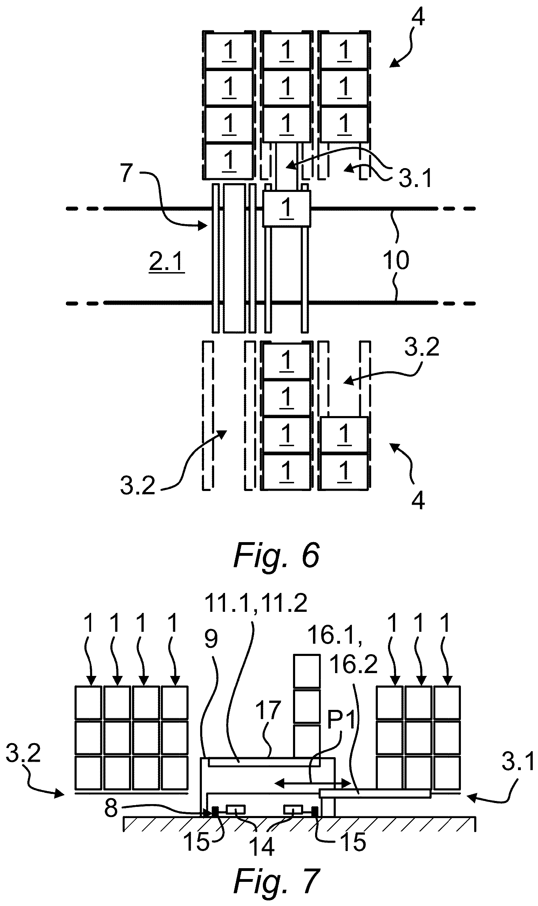

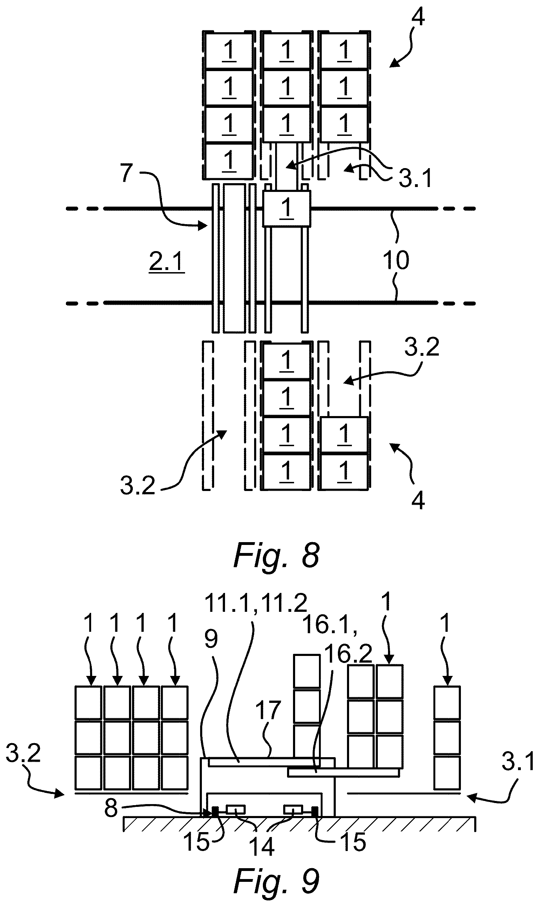

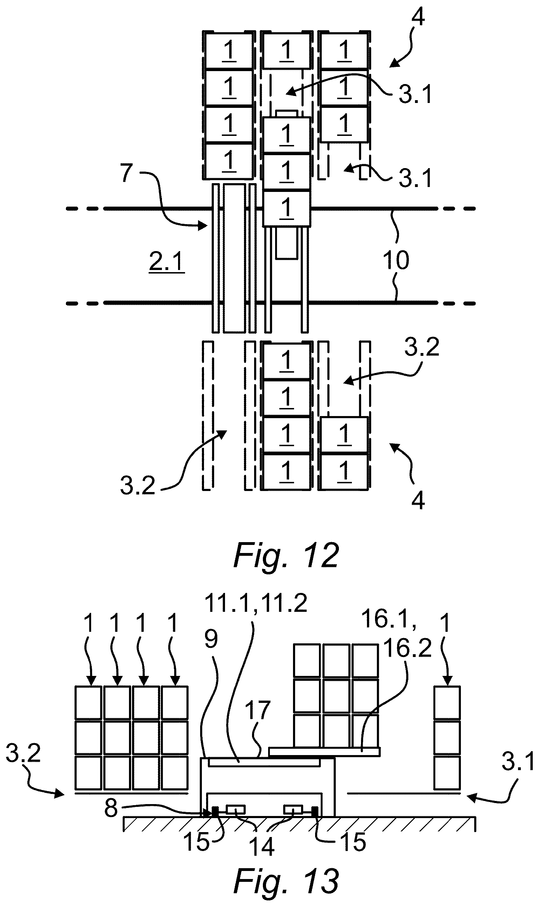

Im Falle des vorliegenden Ausführungsbeispiels weist die Umsetzeinrichtung 12 zwei Hubgabeln 16.1 und 16.2 auf, die zwischen einer Verwahrungsstellung, wie sie beispielsweise in Fig. 3 und Fig. 5 gezeigt ist, in der die Auflageflächen der jeweiligen Hubgabel 16.1, 16.2 innerhalb einer Abstellfläche 17 der Plattform 9 positioniert sind und einer Aufnahmestellung, wie sie beispielsweise in Fig. 7 gezeigt ist, in der die Auflagefläche der Hubgabel 16.1, 16.2 aus der Abstellfläche 17 der Plattform 9 herausgefahren sind, in Pfeilrichtung P1 (Fig. 7) längsverstellbar an dem Fahrwerk 8 gelagert ist, wobei die Hubgabel 16.1, 16.2 außerdem aus einer Absenkstellung, wie sie beispielsweise in Fig. 3, Fig. 5 und Fig. 7 gezeigt ist, in der die Auflageflächen der Hubgabeln 16.1, 16.2 unterhalb der Ebene der Abstellfläche 17 der Plattform 9 positioniert sind und wenigstens einer Anhebestellung, wie sie beispielsweise in Fig. 9, Fig. 11 und Fig. 13 gezeigt ist, insbesondere einer Anhebestellung in der die Auflageflächen der Hubgabel 16.1, 16.2 über der Ebene der Abstellfläche 17 der Plattform 9 (Fig. 13) positionierbar sind, höhenverstellbar an dem Fahrwerk 8 gelagert ist. Die Anhebestellung liegt somit generell über der Absenkstellung und kann bis zu der Maximalstellung, wie sie in Fig. 13 aufgezeigt ist, angehoben sein, in der die Auflageflächen der Hubgabel 16.1, 16.2 über der Abstellfläche 17 der Plattform 9 liegt.

Die Umsetzeinrichtung 12 kann demgemäß eine erste Hubgabel 16.1 aufweisen, welche derart an der Plattform 9 gelagert ist, dass sie in der Verwahrungsstellung (Fig. 3 und Fig. 5) innerhalb des ersten Abstellspaltenbereiches 11.1 der Abstellfläche 17 der Plattform 9 positioniert ist und die Umsetzeinrichtung 12 kann eine von der ersten Hubgabel 16.1 verschiedene zweite Hubgabel 16.2 aufweisen, die unabhängig von der ersten Hubgabel 16.1 bewegbar gelagert ist und die derart an der Plattform 9 gelagert ist, dass sie in der Verwahrungsstellung (Fig. 3 und Fig. 5) innerhalb des zweiten Abstellspaltenbereiches 11.2 der Abstellfläche 17 der Plattform 9 positioniert ist.

Die Fig. 2, Fig. 4, Fig. 6, Fig. 8, Fig. 10, Fig. 12, Fig. 14 und Fig. 16 zeigen jeweils einen vergrößerten Ausschnitt der Draufsicht auf ein Kommissioniersystem 18 gemäß Fig. 18 in der beispielhaften ersten Lagergasse 2.1 des Lagers 4 mit dem Fördermittel 7 und gegenüberliegenden Lagerplätzen 3.1, 3.2, die mit beispielhaften Warenträgerstapel 1 bestückt sind. Die Fig. 3, Fig. 5, Fig. 7, Fig. 9, Fig. 11, Fig. 13, Fig. 15 und Fig. 17 zeigen eine jeweils zugeordnete Seitenansicht dieses Ausschnitts.

In Fig. 2 und Fig. 3 sind die Hubgabeln 16.1 und 16.2 in ihren Verwahrungsstellungen und ragen somit nicht über die Kontur des Fördermittels 7 bzw. über die Kontur der Plattform 9 des Fördermittels 7 seitlich hinaus. Das Fördermittel 7 nähert sich in der ersten Lagergasse 2.1 den Lagerplätzen 3.1, um von dort Warenträgerstapel 1 aufzunehmen.

In Fig. 4 und Fig. 5 befindet sich das Fördermittel 7 unmittelbar an den Lagerplätzen 3.1, bzw. mit seiner ersten Hubgabel 16.1 in einer Position an der mittleren Reihe von drei Lagereihen der Lagerplätze 3.1, um von dort beispielsweise zwei Warenträgerstapel 1 von insgesamt drei vorhandenen Warenträgerstapel 1 aufzunehmen. Auf der rechts dargestellten Abstellfläche 17 der beiden Abstellflächen 17 der Plattform 9 steht bereits ein erster Warenträgerstapel 1, der von einem anderen Lagerplatz bereits aufgenommen wurde. Dieser erste Warenträgerstapel 1 soll auf der Plattform 9 verbleiben, wird jedoch, wie im Folgenden noch näher beschrieben ist, hinsichtlich seiner Position auf der Abstellfläche 17 der Plattform 9 noch umpositioniert. So wird der erste Warenträgerstapel 1 mittels der ersten Hubgabel 16.1 zunächst von der mittleren Position gemäß Fig. 2 in eine auf die Lagerplätze 3.1 zubewegte Randposition gemäß Fig. 4 umgesetzt, bevor zusätzliche Warenträgerstapel 1 von dem Lagerplätzen 3.1 aufgenommen werden.

Wie in Fig. 6 und Fig. 7 aufgezeigt ist, wird die erste Hubgabel 16.1 in ihre Aufnahmestellung ausgefahren, so dass die erste Hubgabel 16.1 gleichzeitig unter zwei Warenträgerstapel 1 fahren kann, die auf den Lagerplätzen 3.1 des Lagers 4 vorgehalten sind.

Wie in Fig. 8 und Fig. 9 aufgezeigt ist, werden die auf den Lagerplätzen 3.1 des Lagers 4 vorgehaltenen zwei Warenträgerstapel 1 durch die erste Hubgabel 16.1 angehoben und in Richtung der Verwahrungsstellung auf die Plattform 9 des Fördermittels 7 zurückbewegt.

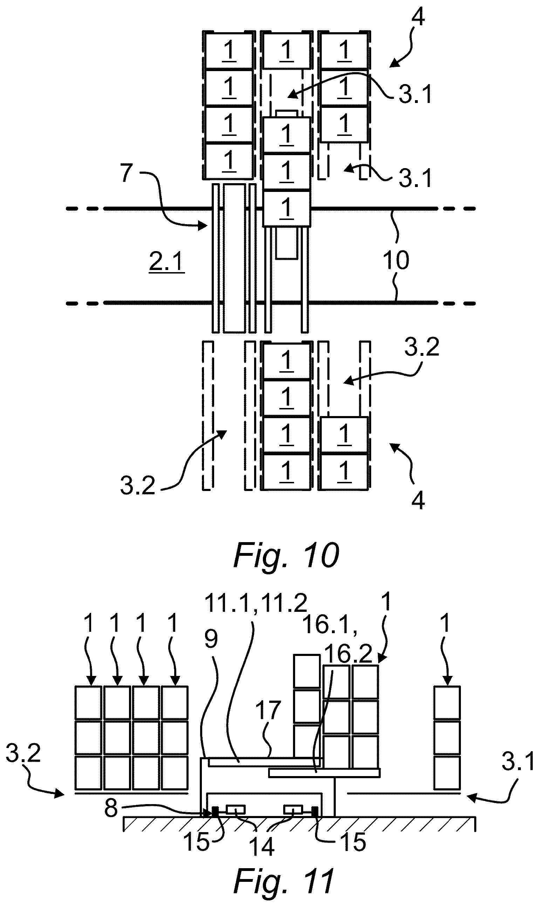

Die Fig. 10 und Fig. 11 zeigten, wie die beiden neu aufgenommenen Warenträgerstapel 1 seitlich an den bereits vorhandenen ersten Warenträgerstapel 1 herangeführt wird, so dass alle drei Warenträgerstapel 1 nebeneinander positioniert sind.

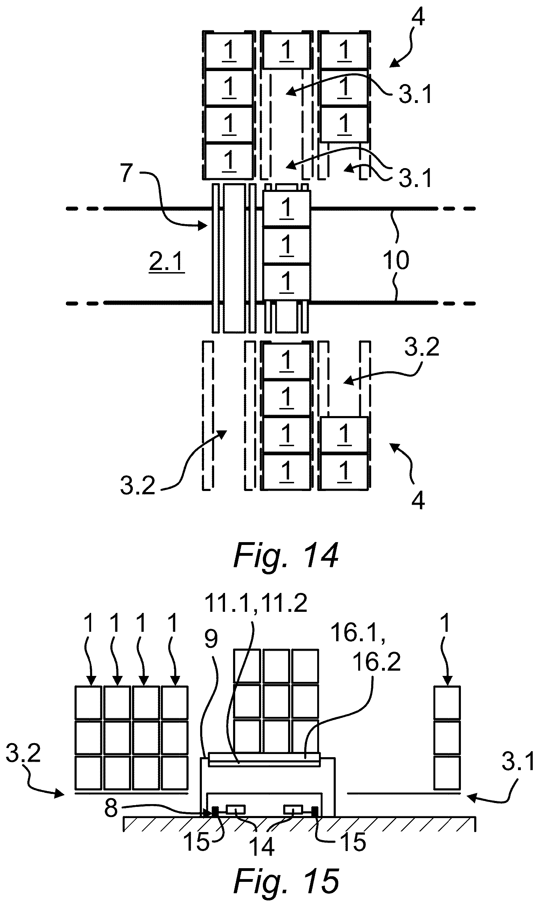

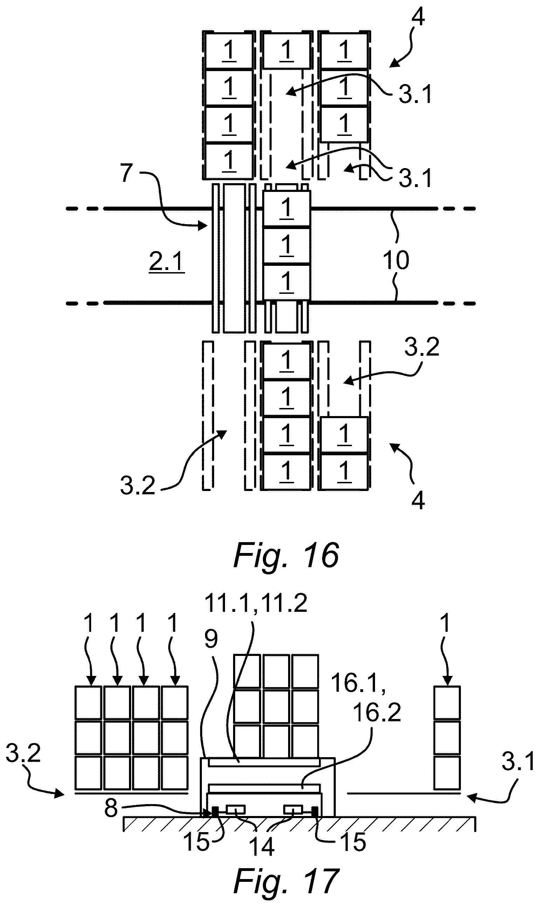

In Fig. 12 und Fig. 13 ist dargestellt, wie alle drei Warenträgerstapel 1 durch die erste Hubgabel 16.1 nun gemeinsam angehoben werden. In Fig. 14 und Fig. 15 ist sodann dargestellt, wie alle drei Warenträgerstapel 1 durch die erste Hubgabel 16.1 auf die Plattform 9 zurückgezogen werden, so dass alle drei Warenträgerstapel 1 schließlich auf der Plattform 9 aufgenommen sind und dort abgestellt werden. Außerdem wird die erste Hubgabel 16.1, wie dies in Fig. 16 und Fig. 7 aufgezeigt ist, wieder in die Verwahrungsstellung (siehe auch Ausgangsstellung gemäß Fig. 3) abgesenkt.

Die Fig. 18 zeigt eine beispielhafte Ausführungsforme eines erfindungsgemäßen Kommissioniersystems 18 zum automatischen Kommissionieren der Warenträgerstapel 1, insbesondere zum automatischen Kommissionieren von Warenträgerstapel 1 gemäß einem Verfahren nach einem der beschriebenen Ausführungsformen.

Das Kommissioniersystems 18 umfasst ein elektronisches Lagerverwaltungssystem 19, welches ausgebildet und eingerichtet ist, den Transport von vereinzelten Warenträgerstapel 1 aus sortenrein palettierten Quell-Ladungsträgern 20a auf Transportladungsträger 5 in Abhängigkeit eines Kommissionierauftrags und einer Palettenbildungsvorschrift zu planen.

Das Kommissioniersystems 18 umfasst eine Depalettierstation 20, die ausgebildet und eingerichtet ist zum automatischen Auflösen sortenrein palettierter Quell-Ladungsträger 20a bestehend aus mehreren in Reihen und Spalten angeordneten Warenträgerstapel 1 in einzelne Warenträgerstapel 1 oder Reihen von Warenträgerstapel 1.

Das Kommissioniersystems 18 weist beispielsweise, d.h. optional einen Umsetzer 21 auf, der ausgebildet und eingerichtet ist zum automatischen Umorientieren jeweiliger Warenträgerstapel 1 bezüglich der Transportrichtung in Querlauf, die vor dem Umorientieren in Längslauf orientiert sind.

Das Kommissioniersystems 18 umfasst das Lager 4 mit mehreren Lagergassen 2.1, 2.2 und Lagerplätzen 31., 3.2 zum Lagern von sortenreinen und/oder vorkommissionierten Warenträgerstapel 1.

Eine Versand-Palettierungsstation 6a des Kommissioniersystems 18 ist ausgebildet und eingerichtet zum Bereitstellen eines leeren Transportladungsträgers 5 und zum Abtransportieren eines mit Warenträgerstapel 1 beladenen Transportladungsträgers 5 aus dem Kommissioniersystem 18.

Das Kommissioniersystems 18 umfasst mehrere Fördermittel 7, insbesondere mehrere Fördermittel 7 nach einem der beschriebenen Ausführungsformen, die ausgebildet und eingerichtet sind, sowohl zum automatischen Transportieren der Warenträgerstapel 1 von der Depalettierstation 20 und/oder vom Umsetzer 21 zu den Lagerplätzen 3.1, 3.2 des Lagers 4 als auch zum automatischen Transportieren von Warenträgerstapel 1, die das Fördermittel 7 automatisch angesteuert durch das elektronische Lagerverwaltungssystem 19 in Abhängigkeit des jeweiligen Kommissionierauftrags und einer jeweiligen Palettenbildungsvorschrift automatisch auf die Plattform 9 aufkommissioniert hat, entlang einer Fahrbahn 10 von den Lagerplätzen 3.1, 3.2 zu der Versand-Palettierungsstation 6, um die kommissionierten Warenträgerstapel 1 an der Versand-Palettierungsstation 6a automatisch an den an der Versand-Palettierungsstation 6a bereitgestellten Transportladungsträger 5 abzugeben.

Mit dem Kommissioniersystems 18 können palettierte Quell-Ladungsträger 20a bestehend aus mehreren in Reihen und Spalten angeordneten Warenträgerstapel 1 an der Depalettierstation 20 automatisch in einzelne Warenträgerstapel 1 aufgelöst werden, und die vereinzelten Warenträgerstapel 1 durch das Fördermittel 7 an den wenigstens einen ersten Lagerplatz 3.1 und/oder den wenigstens einen zweiten Lagerplatz 3.2 sortiert nach Warenstapelart automatisch verteilt werden.

Nach dem Auflösen der Warenträgerstapel 1 des Quell-Ladungsträgers 20a in vereinzelte Warenträgerstapel 1, kann ein jeweiliger Warenträgerstapel 1, der bezüglich der folgenden Transportrichtung in Längslauf orientiert ist, durch den Umsetzer 21 umorientiert werden, bevor der Warenträgerstapel 1 in Transportrichtung automatisch auf das Fördermittel 7 transportiert wird.

Das automatische Transportieren der in Reihen auf den Abstellspaltenbereichen gemäß dem Kommissionierauftrag aufgenommenen Warenträgerstapel 1 durch eines der mehreren Fördermittel 7 entlang der Fahrbahn 10 erfolgt an den Versand-Palettierungsbereich 6, und zwar mit einem abschließenden automatischen Umsetzen der Warenträgerstapel 1, insbesondere einem gemeinsamen automatischen Umsetzen aller Warenträgerstapel 1 von dem Fördermittel 7 auf den Transportladungsträger 5 an dem Versand-Palettierungsbereich 6.

## Patentansprüche

1. Verfahren zum automatischen Kommissionieren von Warenträgerstapel (1), aufweisend die Schritte:
- Bereitstellen sortenreiner oder vorkommissionierter Warenträgerstapel (1) in wenigstens einer ersten Lagergasse (2.1) mit mehreren ersten Lagerplätzen (3.1) eines Lagers (4) zum Lagern sortenreiner oder vorkommissionierter Warenträgerstapel (1) einer ersten Warenstapelart und in wenigstens einer von der ersten Lagergasse (2.1) verschiedenen zweiten Lagergasse (2.2) mit mehreren zweiten Lagerplätzen (3.2) des Lagers (4) zum Lagern sortenreiner oder vorkommissionierter Warenträgerstapel (1) einer von der ersten Warenstapelart verschiedener zweiten Warenstapelart,
- Bereitstellen eines Transportladungsträgers (5) an einem Versand-Palettierungsbereich (6),
- Bereitstellen wenigstens eines automatisch angetriebenen Fördermittels (7), das ein Fahrwerk (8) zum Bewegen einer Plattform (9) des Fördermittels (7) auf einer entlang der wenigstens einen ersten Lagergasse (2.1) und wenigstens einen zweiten Lagergasse (2.2) des Lagers (4) und über den Versand-Palettierungsbereich (6) laufenden Fahrbahn (10) aufweist, wobei die Plattform (9) einen ersten Abstellspaltenbereich (11.1) aufweist, der ausgebildet ist zum Abstellen mehrerer Warenträgerstapel (1) nebeneinander in einer ersten Reihe, und die Plattform (9) wenigstens einen parallel zum ersten Abstellspaltenbereich (11.1) verlaufenden zweiten Abstellspaltenbereich (11.2) aufweist, der ausgebildet ist zum Abstellen mehrerer weiterer Warenträgerstapel (1) nebeneinander in einer zweiten Reihe parallel zur ersten Reihe an Warenträgerstapel (1), und wobei das automatisch angetriebene Fördermittel (7) wenigstens eine Umsetzeinrichtung (12) aufweist, die ausgebildet ist zum automatischen Umsetzen eines Warenträgerstapels (1) aus einem der ersten Lagerplätze (3.1) und/oder aus einem der zweiten Lagerplätze (3.2) des Lagers (4) auf den ersten Abstellspaltenbereich (11.1) und/oder auf den zweiten Abstellspaltenbereich (11.2),
- automatisches Aufnehmen wenigstens eines Warenträgerstapels (1) aus einem der ersten Lagerplätze (3.1) gemäß eines Kommissionierauftrags mittels der Umsetzeinrichtung (12) des Fördermittels (7) auf den ersten Abstellspaltenbereich (11.1) des Fördermittels (7) und automatisches Aufnehmen wenigstens eines Warenträgerstapels (1) aus einem der zweiten Lagerplätze (3.2) gemäß dem Kommissionierauftrag mittels der Umsetzeinrichtung (12) des Fördermittels (7) auf den ersten Abstellspaltenbereich (11.1) des Fördermittels (7) oder auf den wenigstens einen zweiten Abstellspaltenbereich (11.2) des Fördermittels (7), und
- automatisches Transportieren der in Reihen auf den Abstellspaltenbereichen (11.1, 11.2) gemäß dem Kommissionierauftrag aufgenommenen Warenträgerstapel (1) durch das Fördermittel (7) entlang der Fahrbahn (10) an den Versand-Palettierungsbereich (6) und automatisches Umsetzen aller Warenträgerstapel (1) von dem Fördermittel (7) auf eine an den Transportladungsträger (5) führende Fördereinrichtung (22) oder direkt auf den Transportladungsträger (5) an dem Versand-Palettierungsbereich (6).

2. Verfahren nach Anspruch 1, **dadurch gekennzeichnet, dass** das automatische Umsetzen aller Warenträgerstapel (1) von dem Fördermittel (7) auf den Transportladungsträger (5) an dem Versand-Palettierungsbereich (6) mittels der Umsetzeinrichtung (12) des Fördermittels (7) durchgeführt wird.

3. Verfahren nach Anspruch 1 oder 2, **dadurch gekennzeichnet, dass** die Warenträgerstapel (1) durch die Umsetzeinrichtung (12) des Fördermittels (7) auf einen bestimmten Abstellplatz (13) von mehreren verschiedenen Abstellplätzen (13) des ersten Abstellspaltenbereichs (11.1) und des wenigstens einen zweiten Abstellspaltenbereichs (11.2) gemäß des Kommissionierauftrags und in Abhängigkeit einer Palettenbildungsvorschrift auftragsbezogen auf die Plattform (9) des Fördermittels (7) automatisch verteilt werden.

4. Verfahren nach einem der Ansprüche 1 bis 3, **dadurch gekennzeichnet, dass** palettierte Quell-Ladungsträger (20a) bestehend aus mehreren in Reihen und Spalten angeordneten Warenträgerstapel (1) an einer Depalettierstation (20) automatisch in einzelne Warenträgerstapel (1) aufgelöst werden, und die vereinzelten Warenträgerstapel (1) durch das Fördermittel (7) an den wenigstens einen ersten Lagerplatz (3.1) und/oder den wenigstens einen zweiten Lagerplatz (3.2) sortiert nach Warenstapelart automatisch verteilt werden.

5. Verfahren nach Anspruch 4, **dadurch gekennzeichnet, dass** nach dem Auflösen der Warenträgerstapel (1) des Quell-Ladungsträgers (20a) in vereinzelte Warenträgerstapel (1), ein jeweiliger Warenträgerstapel (1), der bezüglich der folgenden Transportrichtung in Längslauf orientiert ist, in Querlauf umorientiert wird, bevor der Warenträgerstapel (1) in Querlauf in Transportrichtung automatisch auf das Fördermittel (7) transportiert wird.

6. Verfahren nach einem der Ansprüche 1 bis 5, **dadurch gekennzeichnet, dass** als Warenträgerstapel (1) Stapel von Getränkekisten automatisch kommissioniert werden.

7. Verfahren nach einem der Ansprüche 1 bis 6, **dadurch gekennzeichnet, dass** das automatische Transportieren der in Reihen auf den Abstellspaltenbereichen (11.1, 11.2) gemäß dem Kommissionierauftrag aufgenommenen Warenträgerstapel (1) durch das Fördermittel (7) entlang der Fahrbahn (10) an den Versand-Palettierungsbereich (6) erfolgt.

8. Fördermittel (7) zum automatischen Transportieren und Kommissionieren von Warenträgerstapel (1), insbesondere zum automatischen Kommissionieren von Warenträgerstapeln (1) gemäß einem Verfahren nach einem der Ansprüche 1 bis 7, aufweisend:
- ein Fahrwerk (8) mit Antrieben (14) zum automatischen Fahren des Fahrwerks (8) entlang einer Fahrbahn (10),
- eine am Fahrwerk (8) angeordnete Plattform (9), die einen ersten Abstellspaltenbereich (11.1) aufweist, der ausgebildet ist zum Abstellen mehrerer Warenträgerstapel (1) nebeneinander in einer ersten Reihe, und die wenigstens einen parallel zum ersten Abstellspaltenbereich (11.1) verlaufenden zweiten Abstellspaltenbereich (11.2) aufweist, der ausgebildet ist zum Abstellen mehrerer weiterer Warenträgerstapel (1) nebeneinander in einer zweiten Reihe parallel zur ersten Reihe an Warenträgerstapel (1), und
- eine Umsetzeinrichtung (12), die ausgebildet ist zum automatischen Aufnehmen von Warenträgerstapel (1) auf den ersten Abstellspaltenbereich (11.1) und/oder auf den zweiten Abstellspaltenbereich (11.2) der Plattform (9).

9. Fördermittel (7) nach Anspruch 8, **dadurch gekennzeichnet, dass** die Umsetzeinrichtung (12) wenigstens eine Hubgabel (16.1, 16.2) aufweist, die zwischen einer Verwahrungsstellung, in der die Auflagefläche der Hubgabel (16.1, 16.2) innerhalb einer Abstellfläche (17) der Plattform (9) positioniert ist und einer Aufnahmestellung, in der die Auflagefläche der Hubgabel (16.1, 16.2) aus der Abstellfläche (17) der Plattform (9) herausgefahren ist, längsverstellbar an dem Fahrwerk (8) gelagert ist, wobei die Hubgabel (16.1, 16.2) außerdem aus einer Absenkstellung, in der die Auflagefläche der Hubgabel (16.1, 16.2) unterhalb der Ebene der Abstellfläche der Plattform (9) positioniert ist und wenigstens einer Anhebestellung, insbesondere einer Anhebestellung in der die Auflageflächen der Hubgabel (16.1, 16.2) über der Ebene der Abstellfläche (17) der Plattform (9) positioniert ist, höhenverstellbar an dem Fahrwerk (8) gelagert ist.

10. Fördermittel (7) nach Anspruch 9, **dadurch gekennzeichnet, dass** die Umsetzeinrichtung (12) eine erste Hubgabel (16.1) aufweist, welche derart an der Plattform (9) gelagert ist, dass sie in der Verwahrungsstellung innerhalb des ersten Abstellspaltenbereiches (11.1) der Abstellfläche (17) der Plattform (9) positioniert ist und die Umsetzeinrichtung (12) eine von der ersten Hubgabel (16.1) verschiedene zweite Hubgabel (16.2) aufweist, die unabhängig von der ersten Hubgabel (16.1) bewegbar gelagert ist und die derart an der Plattform (9) gelagert ist, dass sie in der Verwahrungsstellung innerhalb des zweiten Abstellspaltenbereiches (11.2) der Abstellfläche (17) der Plattform (9) positioniert ist.

11. Fördermittel (7) nach einem der Ansprüche 8 bis 10, **dadurch gekennzeichnet, dass** das Fördermittel (7) als ein schienengebundenes Fahrzeug, insbesondere als eine Elektrobodenbahn oder eine Elektrohängebahn, ausgebildet ist oder als ein schienenloses Fahrzeug, insbesondere als ein auf festen Routen entlang einer Fahrbahn fahrendes fahrerloses Transportfahrzeug oder als ein frei navigierter mobiler Roboter, ausgebildet ist.

12. Kommissioniersystem (18) zum automatischen Kommissionieren von Warenträgerstapeln (1), insbesondere zum automatischen Kommissionieren von Warenträgerstapeln (1) gemäß einem Verfahren nach einem der Ansprüche 1 bis 7, aufweisend:
- ein elektronisches Lagerverwaltungssystem (19), welches ausgebildet und eingerichtet ist, den Transport von vereinzelten Warenträgerstapel (1) aus palettierten Quell-Ladungsträgern (20a) auf Transportladungsträger (5) in Abhängigkeit eines Kommissionierauftrags und einer Palettenbildungsvorschrift zu planen,
- eine Depalettierstation (20), die ausgebildet und eingerichtet ist zum automatischen Auflösen palettierter Quell-Ladungsträger (20a) bestehend aus mehreren in Reihen und Spalten angeordneten Warenträgerstapel (1) in einzelne Warenträgerstapel (1) oder Reihen von Warenträgerstapeln (1),
- einen Umsetzer (21), der ausgebildet und eingerichtet ist zum automatischen Umorientieren jeweiliger Warenträgerstapel (1),
- ein Lager (4) mit mehreren Lagergassen (2.1, 2.2) und Lagerplätzen (3.1, 3.2) zum Lagern von sortenreinen und/oder vorkommissionierten Warenträgerstapel (1),
- eine Versand-Palettierungsstation (6), die ausgebildet und eingerichtet ist zum Bereitstellen eines leeren Transportladungsträgers (5) und zum Abtransportieren eines mit Warenträgerstapeln (1) beladenen Transportladungsträgers (5) aus dem Kommissioniersystem (18), sowie
- mehrere Fördermittel (7), insbesondere mehrere Fördermittel (7) nach einem der Ansprüche 8 bis 11, die ausgebildet und eingerichtet sind, sowohl zum automatischen Transportieren der Warenträgerstapel (1) von der Depalettierstation (20) und/oder vom Umsetzer (21) zu den Lagerplätzen (3.1, 3.2) des Lagers (4) als auch zum automatischen Transportieren von Warenträgerstapeln (1), die das Fördermittel (7) automatisch angesteuert durch das elektronische Lagerverwaltungssystem (19) in Abhängigkeit des jeweiligen Kommissionierauftrags und einer jeweiligen Palettenbildungsvorschrift automatisch auf die Plattform (9) aufkommissioniert hat, entlang einer Fahrbahn (10) von den Lagerplätzen (3.1, 3.2) zu der Versand-Palettierungsstation (6), um die kommissionierten Warenträgerstapel (1) an der Versand-Palettierungsstation (6) automatisch an eine an den Transportladungsträger (5) führende Fördereinrichtung (22) der Versand-Palettierungsstation (6) oder direkt an einen an der Versand-Palettierungsstation (6) bereitgestellten Transportladungsträger (5) abzugeben.
